# EUROPÄISCHE PATENTANMELDUNG

(11) **EP 4 312 171 A1**
(43) Veröffentlichungstag der Anmeldung: **31.01.2024**
(21) Anmeldenummer: 23172789.2
(22) Anmeldetag: 11.05.2023
(51) Int. Cl.: G06Q 10/30, G06Q 50/04, G06Q 50/28

(54) **SYSTEM ZUM VERWALTEN UND NACHVERFOLGEN EINES WIEDERVERWERTBAREN ROHSTOFFS**

(30) Priorität: 29.07.2022 DE 202022104317 U
(71) Anmelder: Interzero Circular Solutions Germany GmbH, 51149 Köln (DE)
(72) Erfinder: WEBER, Giulia, 51149 Köln (DE); WITT, Pascal, 51149 Köln (DE)
(74) Vertreter: Frick, Robert

(57) **Zusammenfassung**

Die vorliegende Erfindung betrifft ein System zum Verwalten und Nachverfolgen eines wiederverwertbaren Rohstoffs, insbesondere über seinen gesamten Verwertungskreislauf hinweg.

## Beschreibung

Die vorliegende Erfindung betrifft ein System zum Verwalten und Nachverfolgen eines wiederverwertbaren Rohstoffs, insbesondere über seinen gesamten Verwertungskreislauf hinweg.

Die Rohstoffknappheit stellt produzierende Unternehmen vor kommende Herausforderungen. Um ihre Produktion aufrechtzuhalten, benötigen sie stetigen Zugriff auf Rohstoffe. Ist dies nicht mehr vollständig durch neu gewonnene Rohstoffe möglich, sind es die Rohstoffe aus den bereits existierenden Produkten, die wiedergewonnen und der Produktion zugeführt werden müssen. Die Wiederverwertung von bereits verarbeiteten Rohstoffen liegt dabei auch im Sinne der Endverbraucher, die immer mehr auf die Nachhaltigkeit eines gekauften Produkts achten.

Um der Rohstoffknappheit entgegenzuwirken und den Bedürfnissen der Nutzer zu entsprechen, müssen Kreisläufe in der Wiederverwertung von Rohstoffen geschlossen werden. Gleichzeitig ist es für ein produzierendes Unternehmen dabei von hoher Wichtigkeit einen Überblick über die sich gerade im Nutzungskreislauf befinden Rohstoffe zu besitzen, da hieraus gefolgert werden kann, wann ein entsprechender Rücklauf des Rohstoffs vermutlich erfolgen wird und welche Menge an neuem Rohstoff zugekauft werden muss, um die Produktion eines Produkts vorausschauend zu planen.

Zudem gibt es auch gesetzgeberische Anstrengungen, die teilweise die Nutzung von einer bestimmten Menge eines recycelten Rohstoffs bei der Erzeugung von neuen Produkten erfordern. Aufgrund einer so entstehenden stark steigenden Nachfrage nach recycelten Rohstoffen wird der Zugriff hierauf schwierig und teuer. Die vorliegende Erfindung setzt sich mit der Idee auseinander die Lücke im Rohstoffkreislauf zu schließen und es so zu ermöglichen einen einmal in einem Produkt verwendeten Rohstoff über den gesamten Produktlebenszyklus nachzuverfolgen. Es wird ein Überblick geschaffen über die Entsorgung und Wiederaufbereitung des in dem Produkt verbauten Rohstoffs, der es ermöglicht, Stoffströme für die Produktion zu planen und mit entsprechenden Mengen von recycelten Rohstoffen zu arbeiten.

Auf dieser Idee basiert der Grundgedanke der vorliegenden Erfindung, wonach die Rohstoffe im produzenteninternen Kreislauf bleiben und der Produktion nach Lebensende wieder zugeführt werden. Das erfindungsgemäße System schafft zu jeder Zeit Transparenz über Aufbereitungsschritte und Ist-Zustände der Stoffe und erlaubt einen strategischen Zugriff auf die Stoffströme im gesamten Kreislauf (von der erstmaligen Verarbeitung bis zur Wiederverwertung des Rohstoffs).

Nach dem derzeitigen Stand der Technik endet das Wissen über den Verbreitungsweg eines Rohstoffs (auch genannt Stoffstrom) mit dem Inverkehrbringen der unter Verwendung des Rohstoffs gefertigten Produkte. Die Ausnahme hiervon bilden Pfandsysteme, bei denen die Rücknahmestationen einen Ansatzpunkt bieten, wie viele der in Verkehr gebrachten Rohstoffe wieder zurückgeführt werden.

Zwar ist der Inverkehrbringer in den meisten Fällen gesetzlich verpflichtet sich um die Entsorgung seiner Produkte zu kümmern und kennt den beauftragten Entsorger, doch weiß er nicht was nach der Entsorgung mit den "Abfällen" (im Folgenden auch: Wertstoff) passiert. Zudem hat er mit der Abgabe an den Entsorger auch keinen Zugriff mehr auf die ursprünglich von ihm hergestellten Produkte, sodass er die für seine Produktion erforderlichen Rohstoffe vollständig am Markt beschaffen muss und dabei auch etwaige gesetzgeberische Vorgaben über einen obligatorischen Mindestanteil eines recycelten Rohstoffs durch entsprechende Zukäufe erfüllen muss.

Das erfindungsgemäße System liefert Transparenz über den Stoffstrom entlang der Verwertungskette, sodass auch nach Anfall des "Abfalls" (bzw. Wertstoff) die Aufbereitung des Stoffstroms sichergestellt wird und durchgehend Zugriff auf den nach dem Verwertungsprozess entstandenen Recycling-Rohstoff besteht. Auch Verluste, die durch den Recycling-Prozess entstehen, werden nach der vorliegenden Erfindung beachtet und sind auf einfache Art und Weise einzusehen.

Vorteilhaft hieran ist, dass eine sehr viel bessere Nachverfolgung des im Kreislauf befindlichen Rohstoffs gegeben ist und, ist dieser einmal recycelt, wieder in den Kreislauf des Herstellers des recycelten Produkts eingebracht werden kann. Man kann aufgrund des so geschaffenen Wissens die für eine Produktion eines Produkts zu kaufende Menge an Rohstoff sehr viel besser planen und dabei auch den in der Zukunft anfallenden recycelten Rohstoff berücksichtigen. Es entsteht ein geschlossener Kreis für einen jeweiligen Rohstoff.

Die oben aufgeführten Vorteile können mit einem erfindungsgemäßen System erlangt werden, dessen Merkmale im Anspruch 1 dargelegt sind. Weitere vorteilhafte Ausführungsformen der vorliegenden Erfindung sind in den abhängigen Ansprüchen niedergeschrieben.

Nach der Erfindung ist ein System zum Verwalten und Nachverfolgen eines wiederverwertbaren, insbesondere recyclingfähigen Rohstoffs vorgesehen, das eine Recheneinheit mit einer Datenbank, die dazu ausgelegt ist, Informationen über einen Rohstoff zu speichern, und mindestens eine Nutzerschnittstelle zum Ein-, Um- und Ausbuchen des Rohstoffs an einer jeden Stelle eines Verwertungskreislaufs des recyclingfähigen Rohstoffs umfasst. Die mindestens eine Nutzerschnittstelle kann ferner dazu konfiguriert sein, beim Vorgang eines Ausbuchens unterschiedliche Arten einer Überweisung eines Rohstoffs zu ermöglichen, insbesondere physische Überweisung, virtuelle Überweisung mit einem Äquivalent oder Überweisung im Geldgegenwert. Zudem ist vorgesehen, dass die in der Datenbank der Recheneinheit gespeicherten Informationen einen Aufbereitungsschritt des Rohstoffs wiedergeben und vorzugsweise einen der nachfolgend beispielhaft dargelegten Aufbereitungsschritte wiedergibt: im Zulauf zum Recycle-Prozess, recycelt und/oder im Recycle-Prozess. Die in der Datenbank der Recheneinheit gespeicherten Informationen geben einen Ist-Zustand des Rohstoffs wieder, bspw. wie folgt: eine Qualität des Rohstoffs, eine spezifische Legierung des Rohstoffs, die Art des Rohstoffs, einen Reinheitsgrad des Rohstoffs und/oder die Menge des Rohstoffs.

Das erfindungsgemäße System bietet dem Nutzer maximal mögliche Transparenz über die von dem Nutzer in Verkehr gebrachten Rohstoffe, sodass Wissen darüber generiert wird, wann mit einem Rücklauf der Rohstoffe zu rechnen ist. Schließlich kann man mithilfe des Systems auch den aktuellen Ist-Zustand des Rohstoffs zu jeder Zeit im Verwertungskreislauf einsehen, sodass man einen sehr guten Überblick darüber erhält, welche Mengen an Rohstoffe zu welchem Zeitpunkt für eine erneute Verarbeitung zur Verfügung stehen. Auch erhält man einen Überblick, an welcher Stelle im Kreislauf, also von der Verarbeitung des Rohstoffs bis hin zu einem Wiederverwenden des recycelten Rohstoffs, sich welche Mengen von Rohstoff befinden und bei welchem Arbeitsschritt ein der Wiederverwertung nicht zuführbarer Ausschussanteil anfällt. So ist es typischerweise üblich, dass bei einem Recycelvorgang eines von einem Endkunden nicht mehr benötigten Produkts nicht alle darin verbauten Rohstoffe zu 100 % wiederverwertet werden können. In der Regel fällt ein bestimmter Prozentsatz des Rohstoffs an, der aus dem Produkt nicht mehr extrahiert werden kann, sodass ein gewisser Ausschuss des vormals in dem Produkt befindlichen Rohstoffs anfällt. Mithilfe der vorliegenden Erfindung erhält man einen direkten Überblick, an welcher Stelle des Verwertungskreislaufs mögliche Verbesserungen das größte Potenzial für effektive Einsparungen mit sich bringen.

Darüber hinaus liefert das erfindungsgemäße System auch die Möglichkeit eines einfachen Verwaltens von Rohstoffen entlang der gesamter Verwertungskette des Rohstoffs, da die Nutzerschnittstelle dazu in der Lage ist, Rohstoff einzubuchen, umzubuchen oder auszubuchen, was vorzugsweise nichts anderes bedeutet, als dass vom Nutzer definierte Mengen an Rohstoff hinzugekauft, verkauft oder an andere Nutzer umgebucht werden kann. Das erfindungsgemäße System stellt demnach eine zentrale Anlaufstelle dar, die es dem Nutzer ermöglicht, sämtliche Verwaltungstätigkeiten in Bezug auf die typischerweise anfallenden Tätigkeiten im Rahmen des Verwertungskreislaufs zu erledigen und stellt dabei gleichzeitig die hierfür erforderlichen Informationen bereit, um entsprechende Entscheidungen zu treffen. Man erkennt bei Nutzung des erfindungsgemäßen Systems auf einfache Art und Weise, wie viel Rohstoff aufgrund eines Recyclingvorgangs wiederverwendet werden kann und welche Mengen an recycelten Rohstoff zugekauft werden müssen, da diese bspw. im Zuge des Recyclings nicht wiedergewonnen werden können aber für das Erfüllen einer gesetzlich vorgeschriebenen Quote erforderlich ist.

Nach einer optionalen Fortbildung der vorliegenden Erfindung kann vorgesehen sein, dass das System ferner eine API-Schnittstelle zum Anbinden von Informationsflüssen Dritter umfasst, um den Ist-Zustand oder einen Aufbereitungsschritt des Rohstoffs zu aktualisieren oder eine Menge des Rohstoffs um- oder auszubuchen.

Wurde bspw. eine bestimmte Anzahl von dem Endkunden übergebenen Produkten von einem Entsorger entgegengenommen, so kann dieser die hierauf basierende Menge an Rohstoffen an den bei ihm in der Entsorgungskette befindlichen Ist-Zustand an die Datenbank der Recheneinheit weitergeben. Bspw. kann hier vermerkt werden, in welchem Prozessschritt sich ein vom Nutzer gewählter Rohstoff befindet. Abhängig von dem Stoffstrom kann der Prozessschritt bspw. ein Sortieren, ein Schreddern oder dergleichen umfassen. Durch diese API-Schnittstelle kann die Datenbank auf dem aktuellen Stand gehalten werden, auch wenn das den Rohstoff aufweisende Produkt in der Bearbeitung eines Dritten ist.

Liegt am Ende des Aufbereitungsschritts der recycelte Rohstoff in einem Zustand vor, der eine Wiederverwertung ermöglicht, kann dann eine Buchung der entsprechenden Menge des recycelten Rohstoffs erfolgen, über die der Eigentümer des Rohstoffs mithilfe des erfindungsgemäßen Systems dann frei verfügen kann. Dieser Posten gibt dann die Menge des recycelten Rohstoffs an, der bspw. einer weiteren Verarbeitung oder einem Produktionsprozess zugeführt werden kann

Vorzugsweise kann vorgesehen sein, dass das System ferner ein Registrierungs- und Authentifizierungselement zum Beschränken der Zugriffsberechtigung auf das System umfasst, insbesondere auf die Recheneinheit mit der Datenbank sowie die Nutzerschnittstelle.

Dadurch wird sichergestellt, dass nur der tatsächlich Verfügungsberechtigte Zugriff auf die Recheneinheit erlangt und eine hohe Sicherheit diesbezüglich hergestellt ist.

Insbesondere kann dabei vorgesehen sein, dass das Registrierungs- und Authentifizierungselement dazu ausgelegt ist, eine Zwei-Faktor-Authentifizierung und/oder eine zweistufige Benutzerregistrierung zu verwenden. Die Zwei-Faktor-Authentifizierung hat sich dabei bewährt, unberechtigte Zugriffe auf Konten von Nutzern zu unterbinden, sodass betrügerische Aktivitäten minimiert werden. Die Zwei-Faktor-Authentifizierungen findet insbesondere da Anwendung, wo ein Nutzer mittels Überweisung Mengen eines Rohstoffs um- bzw. ausbucht, um sicherzustellen, dass der Nutzer auch Eigentümer des Rohstoffs ist.

Nach einer weiteren vorteilhaften Fortbildung der vorliegenden Erfindung kann vorgesehen sein, dass das System ferner ein Endgerät umfasst, insbesondere ein Mobiltelefon, ein Tablet oder einen Desktop-PC, das dazu ausgelegt ist, auf die Nutzerschnittstelle über das Internet zuzugreifen, um hierüber Abfragen oder Änderungen an der Datenbank vorzunehmen.

Der Zugriff auf das in der Recheneinheit für einen Nutzer hinterlegte Materialkonto, über welches ein oder mehrere Rohstoffe eines Benutzers verwaltet bzw. nachverfolgt werden können, kann nach der Erfindung über ein internetfähiges Endgerät, bspw. ein Smartphone, einen Laptop oder einen Desktop-PC erfolgen, sodass es keine örtliche Einschränkung zum Wahrnehmen der Vorteile der vorliegenden Erfindung gibt. Voraussetzung ist lediglich eine Internetverbindung, über die ein Datenaustausch zwischen dem Endgerät und der Recheneinheit des Systems stattfinden kann.

Nach einer optionalen Modifikation der vorliegenden Erfindung kann vorgesehen sein, dass die Recheneinheit dazu ausgelegt ist, mehrere Benutzerkonten zu führen, die einem jeweiligen Nutzer zuordenbar sind, sodass die einem Nutzer gehörenden Rohstoffe über die gesamte Verwertungskette hinweg abrufbar sind.

Ein Benutzerkonto wird teilweise auch als Materialkonto bezeichnet, da das Benutzerkonto primär den Zweck hat, die unterschiedlichen einem Nutzer zuordenbaren Rohstoffe auf einer intuitiven und leicht nachvollziehbaren Art über den gesamten Weg der Verwertungskette darzulegen. Selbstverständlich ist das erfindungsgemäße System auch dazu in der Lage, mehrere solcher Benutzerkonten zu führen, sodass auch eine Vielzahl von jeweiligen Nutzern an Zugriff auf ein nutzerspezifisches Konto nehmen kann.

Vorzugsweise kann die Recheneinheit auch dazu ausgelegt sein, bei Wahl und Durchführung einer bestimmten Art einer Überweisung des Rohstoffs hiervon abhängige Aktionen zu generieren und diese zu versenden.

Ausgehend von einer vom Nutzer angestoßenen Überweisungsart des Rohstoffs kann die Recheneinheit eine spezifisch hierauf gerichtete Aktion erzeugen und versenden, sodass die gewünschte Überweisung des Nutzers auch tatsächlich (durch Dritte) durchgeführt wird.

Vorzugsweise kann hierbei vorgesehen sein, dass eine von einem Nutzer über die Nutzerschnittstelle angestoßene physische Überweisung eines Rohstoffs dazu führt, dass die Recheneinheit einen Auftrag über eine Abholung und Weitertransport der gewünschten Menge an Rohstoff erzeugt, wobei vorzugsweise dieser Auftrag an ein Transportunternehmen gerichtet ist, um die vom Nutzer disponierte Menge des Rohstoffs am derzeitigen Ort abzuholen und an einen gewünschten Ort zu transportieren.

Hierfür kann eine Kommunikationsschnittstelle des Systems verwendet werden, welche die Durchführung der gewünschten Aktion an einen Dritten übermittelt bzw. diesen zur Durchführung der Aktion entsprechend beauftragt.

Nach einer weiteren Fortbildung der vorliegenden Erfindung kann hierbei vorgesehen sein, dass eine von einem Nutzer über die Nutzerschnittstelle angestoßene virtuelle Überweisung eines Rohstoffs dazu führt, dass die Recheneinheit einen Auftrag über eine Lieferung des Rohstoffs an einen vom Nutzer wählbaren Lieferort erzeugt, wobei der zur Lieferung beauftragte Rohstoff nicht der im Eigentum des Nutzers befindliche Rohstoff ist, sondern zu diesem ein Äquivalent darstellt.

Anders als bei der physischen Überweisung wird also nicht der spezifische im Eigentum des Nutzers befindliche recycelte Rohstoff von einem Ort an den anderen Ort verbracht, sondern eine äquivalente Menge im Tausch für den eigentlich im Eigentum des Nutzers befindlichen Rohstoffs an einem bestimmten Zielort zur Verfügung gestellt. Dies hat den Vorteil, dass die Transportkosten teilweise deutlich niedriger ausfallen, wohingegen die Qualität des Rohstoffs gewissen Abweichungen zu dem im Eigentum des Nutzers befindlichen Rohstoffs aufweisen kann.

Darüber hinaus kann vorgesehen sein, dass eine von einem Nutzer über die Nutzerschnittstelle angestoßene Überweisung eines Rohstoffs gegen Geldwert dazu führt, dass dem Nutzer anstelle des in seinem Eigentum befindlichen Rohstoffs der dafür angebotene Geldgegenwert übertragen wird.

Mit dieser Überweisungsart wird über das erfindungsgemäße System die auf dem Konto des Nutzers verfügbare (Teil-) Menge eines Rohstoffs zu Marktpreisen verkauft bzw. gekauft. Dem Nutzer steht also damit ein leicht zu bedienendes Tool offen, den in seinem Eigentum befindlichen Rohstoff zu handeln.

Nach einer weiteren Fortbildung der vorliegenden Erfindung kann vorgesehen sein, dass die Nutzerschnittstelle so konfiguriert ist, dass sie eine Übersicht über sämtliche von einem bestimmten Nutzer in seinem Eigentum befindliche und mittels des Systems erfassten Rohstoffe liefert.

Hierbei sind unterschiedliche Möglichkeiten denkbar, bspw. eine tabellarische Auflistung oder andere ansprechend gestaltete grafische Darstellungen, wie ein Balken- oder ein Tortendiagramm. Diese verschaffen einen schnellen Überblick über die einem Nutzer zustehenden Mengen an Rohstoffe.

Nach einer weiteren Modifikation der vorliegenden Erfindung kann vorgesehen sein, dass die Nutzerschnittstelle so konfiguriert ist, dass sie eine Verlaufsansicht über in der Vergangenheit liegende Aktivitäten in Bezug auf das Disponieren eines Rohstoffs oder der Gesamtheit, der im Eigentum eines Nutzers befindliche Rohstoffe, liefert.

Ferner kann vorgesehen sein, dass die Recheneinheit dazu ausgelegt ist, mehrere Benutzerkonten zu führen, die auf eine Gesamtheit der von einem Nutzer in seinem Eigentum befindlichen Rohstoffe, unabhängig von deren derzeitigem Gang in der Verwertungskette, gerichtet ist.

Vorzugsweise ist die Recheneinheit dazu ausgelegt, die einem Nutzer gehörenden Rohstoffe in Bezug auf Menge, Qualität und im Prozess erfolgten Ausschuss über den gesamten Wiederverwertungskreislauf hinweg transparent und nachvollziehbar darzustellen, vorzugsweise derart, dass ein Nutzer dazu in der Lage ist, mithilfe des Systems die Mengenströme eines Rohstoffs digital zu verwalten und zu steuern.

Nach einer weiteren Modifikation der vorliegenden Erfindung umfasst das System ferner eine Kommunikationseinheit zur Kommunikation mit Dritten, insbesondere mit Lieferanten, Transportunternehmen, Recyclingunternehmen und/oder Entsorgern von Rohstoffen, um die über die Nutzerschnittstelle von einem Nutzer empfangenen Aufträge in Bezug auf einen jeweiligen Rohstoff an einen Dritten zur Ausführung des Auftrags weiterzureichen. Dabei kann auch vorgesehen sein, dass die Kommunikation ein im Hintergrund laufendes System ist, sodass nicht der Nutzer mit Dritten kommuniziert, sondern ein Intermediär.

Weitere Einzelheiten, Merkmale und Vorteile der Erfindung werden anhand der nachfolgenden Figurenbeschreibung ersichtlich. Dabei zeigen:
- Fig. 1:: mehrere Darstellungen über die Zustände eines Rohstoffs im Stoffstrom entlang eines Verwertungskreislaufs ohne und mit dem erfindungsgemäßen System,
- Fig. 2:: eine grafische Darstellung für die auf das Materialkonto einwirkenden Einflüsse über den Verwertungskreislauf,
- Fig. 3:: eine mögliche Darstellung einer Nutzerschnittstelle auf einem Endgerät eines Benutzers der vorliegenden Erfindung, und
- Fig. 4:: eine Darstellung einer Nutzerschnittstelle auf dem Endgerät eines Benutzers zum Wählen der Art der Überweisung des Rohstoffs.

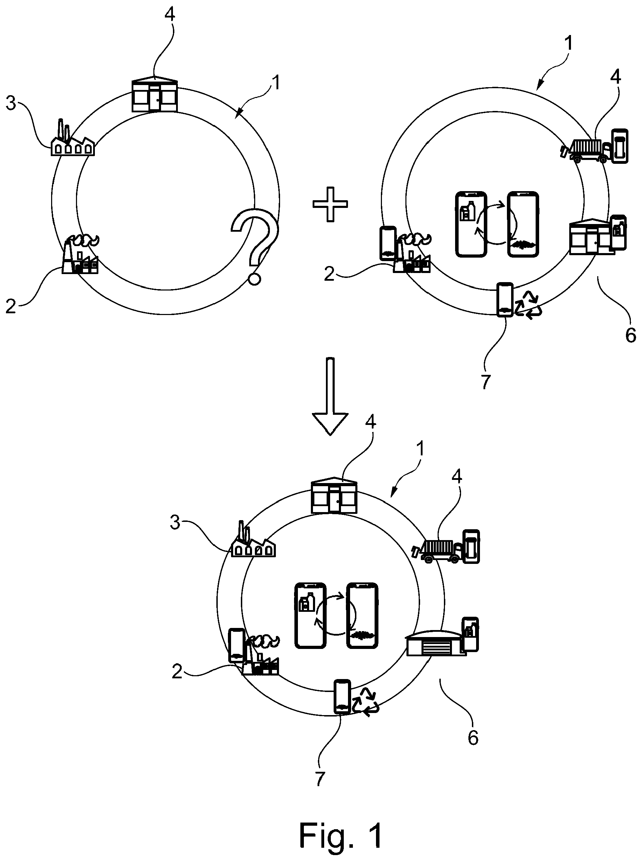

Fig. 1 zeigt mehrere stilisierte Verwertungskreisläufe 1 für einen Rohstoff. Auf der linken oberen Seite sind nur diejenigen Zustände eines Rohstoffs dargestellt, über die der Hersteller eines Produkts nach heutigem Stand Kenntnis besitzt.

So ist dort der Lieferant 2 dargestellt, von dem der Rohstoff bezogen wird. Nach der Lieferung wird der Rohstoff in die Produktion 3 überführt, bevor dieser dann in einzelne Produkte aufgegangen ist, die sich im Handel 4 befinden. Nach einem Verkauf des den Rohstoff aufweisenden Produkts im Handel 4 erfolgt in der Regel keine Rückmeldung darüber, was mit dem an den Endkunden verkauften Produkt (bzw. darin verarbeiteten Rohstoff) passiert. Der Hersteller verliert also die Kenntnis über das verkaufte Produkt und weiß in der Regel auch nicht ob oder wie viele der verkauften Produkte einem Recycling zugeführt werden. Der Hersteller unterliegt der Produktverantwortung und ist für die Entsorgung verantwortlich. Dafür beauftragt er im B2C-Bereich Duale Systeme, die koordiniert werden durch die EAR oder Zentrale Stelle Kunststoffe. Im B2B-Bereich muss er nachweisen, dass er sich über die Entsorgung kümmert. Allerdings reicht hier der Nachweis, das bedeutet nicht, dass der Hersteller Informationen über Mengen kennt.

In dem oben rechts dargestellten Verwertungskreislauf 1 sind die mithilfe der vorliegenden Erfindung nunmehr sichtbaren Stationen des Verwertungskreislaufs 1 dargestellt.

Dabei ist darauf hinzuweisen, dass "Abfälle" an mehreren Stellen entstehen können und über das Materialkonto geführt werden. Bspw. Produktionsabfälle und/oder Obsoletware, Retouren/ Aftersales-Abfälle und/oder End of Life Produkte (EoL).

Wird das den Rohstoff aufweisende Produkt durch den Endkunden entsorgt, wird dieses in der Regel über den Entsorger 4 eingesammelt. Das kann auch in Form der regulären Müllabfuhr durchgeführt werden, welche den (eventuell bereits vorsortierten) vom Endkunden abgeholten Wertstoff an eine entsprechende Sammelstelle 6 abgibt. An dieser Sammelstelle wird der (eventuell grob vorsortierte) Wertstoff dann an einen Aufbereiter 7 weitergereicht, der die in einem Produkt verbauten Rohstoffe herauslöst, separiert und in einer Form aufbereitet, sodass diese möglichst wieder in ihrer Reinform vorliegen und für einen erneuten Durchlauf des Verwertungskreislaufs 1 verwendet werden können.

Informationen über genau jene oben beschriebene Stellen entlang des Verwertungskreislaufs 1 werden nun mithilfe der vorliegenden Erfindung sichtbar, sodass eine Nachverfolgung eines Rohstoffs über den gesamten Verwertungskreislauf 1 möglich ist.

Die in Fig. 1 unten dargestellte Grafik zeigt einen Verwertungskreislauf 1 mit all jenen Stationen in dem Verwertungskreislauf, die bei Verwendung des erfindungsgemäßen Systems für den Nutzer sichtbar sind. Man erkennt, dass hier der gesamte Verwertungskreislauf 1 abgebildet ist und es keine Stellen im Verwertungskreislauf mehr gibt, über die Unwissenheit besteht. Es entsteht demnach ein vollständiger Überblick über den geschlossenen Kreislauf für mindestens einen Rohstoff, wobei dem Fachmann aber klar ist, dass sich die zugrunde liegende Idee der vorliegenden Erfindung auch auf mehrere Rohstoffe erstreckt.

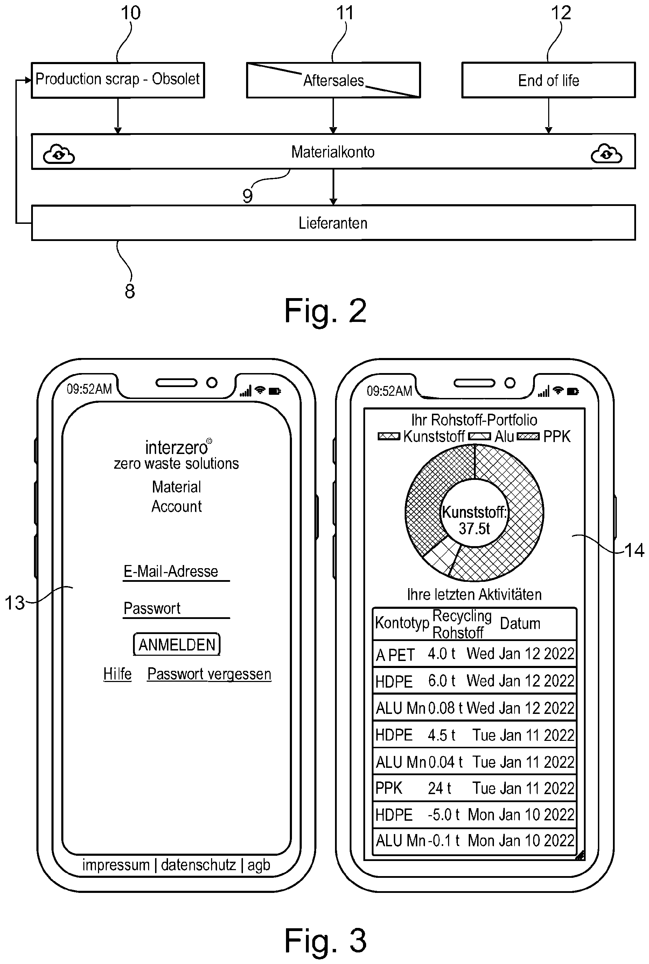

Fig. 2 zeigt ein in der Datenbank der Recheneinheit geführtes Benutzerkonto (auch genannt: Materialkonto 9) sowie die Interaktion mit Dritten oder die mögliche Beeinflussung des Benutzerkontos durch verschiedene entlang des Verwertungskreislaufs auftretende Prozessstufen.

Dies ist beispielhaft in Fig. 2 dargestellt, indem anfallende "Abfälle" zu einer Aktualisierung der in der Recheneinheit geführten Datenbank führen und die Menge an Rohstoff verändern. Beispielhaft soll hier auf einen verbleibenden Rohstoff im Zuge einer Produktion eines Produkts (vgl. Bezugszeichen 10) hingewiesen werden, der sich im Zuge einer Produktion eines Produkts ergibt. Die Menge des nicht in dem Produkt umgesetzten Rohstoffs kann dann in den Materialkonto 9 eingegeben werden, sodass der hiervon tatsächlich noch verfügbare Rohstoff in der Datenbank wiedergegeben wird.

Darüber hinaus fallen auch an den weiteren Prozessstufen nach dem Aftersales 11 und nach dem Lebensende 12 (End of Life) des Produkts "Abfälle" an, die zu einer Aktualisierung des Materialkontos 9 führen und den Fortschritt des Rohstoffs entlang des Verwertungskreislaufs aktuell halten.

Beginnt ein neuer Produktionszyklus eines Produkts kann dann ausgehend von einer Schnittstelle des erfindungsgemäßen Systems auch ein Lieferant 8 das Materialkonto 9 kontaktieren, um fehlende Mengen an Rohstoff für eine Produktion zu beschaffen.

Fig. 3 zeigt eine mögliche Visualisierung einer Schnittstelle zum Interagieren mit dem erfindungsgemäßen System, anhand eines Endgeräts in Form eines Smartphones.

Die linke Darstellung zeigt dabei eine Anmeldemaske 13, in der der Nutzer aufgefordert wird, seine Kennung in Form einer E-Mail-Adresse und das von ihm gewählte Passwort einzugeben, um auf die dem Nutzer zugeordneten Inhalte der Datenbank Zugriff zu gewähren.

Nach erfolgreicher Eingabe der angeforderten Informationen erhält der Nutzer Einblicke auf die ihm zustehenden Ressourcen, wie bspw. anhand der Darstellung 14 gezeigt. Man erkennt, dass der hier beispielhaft betrachtete Nutzer über insgesamt drei Rohstoffe, nämlich Kunststoff, Aluminium und PPK verfügt, wobei die Menge an Kunststoff 37,5 t beträgt. Unterhalb der in einem Ringdiagramm angeordneten Darstellung zur grafischen Wiedergabe der unterschiedlichen Mengen von Rohstoff sind in Listenform die letzten Aktivitäten in Bezug auf das Materialkonto dargestellt. Man erkennt, dass es sowohl Zuflüsse als auch Abflüsse von Rohstoffen gibt, die hierbei berücksichtigt werden.

Durch Ein- und Ausbuchungen (Überweisungen) können Kunden auf der digitalen Plattform Stoffströme managen. Der Nutzer erhält einen Überblick über die wichtigsten Kontoaktivitäten und kann darüber hinaus auch auf ein Postfach und Kontaktdaten zugreifen.

In einem optionalen Kontenbereich können je nach Kunde verschiedene Rohstoffe aufgenommen werden. Bei der Anzeige der Rohstoffkonten können zwei Ebenen unterschieden werden. Die erste Ebene bildet die Stoffart ab. Auf der zweiten Ebene wird die Stoffart in Stoffsorten unterschieden, d.h. in Qualitäten, Legierungen o.ä. Auf der zweiten Ebene finden Einbuchungen von Wertstoff und Einbuchungen von Recycling-Rohstoff statt. Die Einbuchung von Wertstoff ist die initiale Einbuchung des Stoffes in das Konto. Einbuchung von Recycling-Rohstoff bedeutet, dass die Verwertung des Wertstoffs abgeschlossen ist und das Material vom Zustand Wertstoff in den Zustand Recycling-Rohstoff übergeht. Der Recycling-Rohstoff steht dem Kunden dann für eine Verwendung zur Verfügung und kann auf verschiedene Arten überwiesen werden (physisch, virtuell, Gegengeldwert).

Außerdem sind Verwertungsschritte mit Daten zum Ort und Zeit, sowie Hinweisen zu Verlusten in dem Konto sichtbar.

Ferner kann vorgesehen sein, dass das System ein User- und ein Berechtigungskonzept besitzt. Den unterschiedlichen Benutzern werden Rollen mit verschiedenen Berechtigungen zugewiesen. Durch Registrierungsdaten sind die Ränge und Berechtigungen für Vornahmen an Änderungen der Datenbank festgelegt.

Je nach Benutzer kann das Materialkonto verwaltet werden, indem je nach User-Rang unterschiedliche Übersichten der Stoffstromgrößen gezeigt werden. Gemeint ist hier bspw. eine Unterscheidung in Konzern- oder Werk/Filialsicht. Auch kann vorgesehen sein, dass der Benutzer seine Daten im Self-Service-Prinzip eingeben bzw. ändern kann.

Daten zu den Stoffströmen fließen automatisch über geeigneten Schnittstellen in das System ein. Eine mögliche Umsetzung kann über die zwei Hauptsysteme ERP (Oracle EBusiness Suite 12.x) und FI/CO (SAP) erfolgen. Die Datenzulieferung von "Entsorgern/Verwertern" oder anderen dritten sind über API's umgesetzt.

Findet eine Einbuchung statt, kann vorgesehen sein, dass im Hintergrund eine Abholbeauftragung des Wertstoffes erzeugt wird. Ferner kann vorgesehen sein, dass der Betreiber des erfindungsgemäßen Systems oder ein beliebiger Dritter im Anschluss die Aufbereitung des Wertstoffes sicherstellt.

Verschiedene Prozessschritte (Sortieren, Schreddern etc.) sind je nach Stoffstrom im Materialkonto sichtbar. Ist die Aufbereitung des Wertstoffes abgeschlossen - ist also Recycling-Rohstoff entstanden, der dem Kreislauf wieder zugeführt werden kann - wird die Menge des Wertstoffes ("Abfall"") von dem Wertstoffkonto abgebucht und die hieraus gewonnene Menge von Recycling-Rohstoff dem Konto gutgeschrieben. Der Kunde verfügt nun über den Recycling-Rohstoff und kann ihn überweisen.

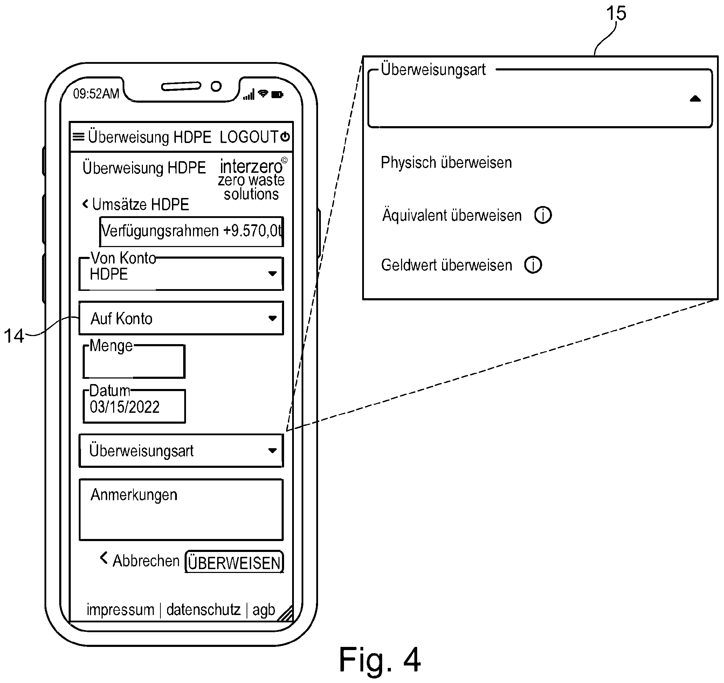

Fig. 4 zeigt die möglichen Arten, die dem Nutzer zur Verfügung stehen, um eine Überweisung zu tätigen. Je nach Überweisungsart finden unterschiedliche Prozesse im Hintergrund statt.

Durch Auswählen der physischen Überweisung wird ein Transport über den tatsächlich entstandenen Recycling-Rohstoff ausgelöst (ortsgebunden). Es wird der beim Recycling anfallende Rohstoff transferiert.

Durch Auswählen einer virtuellen Überweisung wird ein Transport über ein Äquivalent des Recycling-Rohstoffes ausgelöst (ortsunabhängig). Anstelle des tatsächlich angefallenen Recycling-Rohstoffes wird dieselbe Menge eines vergleichbaren Recycling-Rohstoffes an einen Wunschort transferiert. Der Vorteil hierbei ist, dass man sich die hohen Kosten, die bei einem Abholen des tatsächlich angefallenen Recycling-Rohstoffes anfallen, verringern kann und mitunter deutlich schnellere Lieferzeiten erreicht.

Durch Auswählen der letzten Option des Geldgegenwertes wird eine Transaktion ausgelöst, die den Verkauf des tatsächlich angefallenen Recycling-Rohstoffs in die Wege leitet und den hierbei erzielten Geldwert dem Nutzer vorzugsweise auf ein Bankkonto gutschreibt.

Mit der Nutzung des erfindungsgemäßen Systems erhält der Nutzer neue Möglichkeiten sich Transparenz über die Verwertung seiner Wertstoffe zu verschaffen. Eine solch vollumfängliche und gebündelte bzw. digitale Darstellung der Verwertungswege ist im Stand der Technik unerreicht. Insbesondere die Bündelung der verschiedenen Stoffströme in einer Plattform bietet einen enormen Mehrwert für den Nutzer, da bisher die verschiedenen Stoffe meist durch verschiedene Unternehmen/Vertragspartner, mindestens aber durch verschiedene Geschäftseinheiten des Vertragspartners, gesteuert bzw. verwertet wurden.

Ein weiterer Vorteil besteht in der Möglichkeit des strategischen Zugriffs auf den Stoffstrom. Nach dem Stand der Technik ist es so, dass ein Unternehmen seinen Wertstoff ("Abfall") verkauft und nach der Verwertung den hieraus gewonnenen Recycling-Rohstoff zurückkauft. Hierbei hat das Unternehmen keine Gewähr den Recycling-Rohstoff tatsächlich zu erhalten und ist zudem von den aktuellen Marktpreisen abhängig. Durch das erfindungsgemäße System ist es möglich, dass der Nutzer den Wertstoff in seinem Kreislauf behält und sich so den strategischen Zugriff hierauf sichert, wobei die Verwaltung und Steuerung der Stoffströme digital durchgeführt werden können.

## Patentansprüche

1. System zum Verwalten und Nachverfolgen eines wiederverwertbaren, insbesondere recyclefähigen Rohstoffs, umfassend:
eine Recheneinheit mit einer Datenbank, die dazu ausgelegt ist, Informationen über einen Rohstoff zu speichern,
mindestens eine Nutzerschnittstelle zum Ein-, Um- und Ausbuchen des Rohstoffs an einer jeden Stelle eines Verwertungskreislaufs des recyclefähigen Rohstoffs, wobei
die mindestens eine Nutzerschnittstelle ferner dazu konfiguriert ist, beim Vorgang eines Ein-, Um- und Ausbuchens unterschiedliche Arten einer Überweisung eines Rohstoffs zu ermöglichen, insbesondere physische Überweisung, virtuelle Überweisung mit einem Äquivalent oder Überweisung im Geldgegenwert,
die in der Datenbank der Recheneinheit gespeicherten Informationen einen Aufbereitungsschritt des Rohstoffs wiedergeben, bspw. in Rohform vorliegend, verbaut in Produkt, entsorgt, im Zulauf zum Recycle-Prozess, recycelt und/oder im Recycle-Prozess, und
die in der Datenbank der Recheneinheit gespeicherten Informationen einen Ist-Zustand des Rohstoffs wiedergeben, bspw. eine Qualität des Rohstoffs, eine spezifische Legierung des Rohstoffs, die Art des Rohstoffs, einen Reinheitsgrad des Rohstoffs und/oder die Menge des Rohstoffs.

2. System nach dem vorhergehenden Anspruch 1, ferner umfassend eine API-Schnittstelle zum Anbinden von Informationsflüssen Dritter, um den Ist-Zustand oder einen Aufbereitungsschritt des Rohstoffs zu aktualisieren oder eine Menge des Rohstoffs um- oder auszubuchen.

3. System nach einem der vorhergehenden Ansprüche, ferner umfassend ein Registrierungs- und Authentifizierungselement zum Beschränken der Zugriffsberechtigung auf das System, insbesondere auf die Recheneinheit mit der Datenbank sowie die Nutzerschnittstelle.

4. System nach dem vorhergehenden Anspruch 3, wobei das Registrierungs- und Authentifizierungselement dazu ausgelegt ist, eine Zwei-Faktor-Authentifizierung und/oder eine zweistufige Benutzerregistrierung zu verwenden.

5. System nach einem der vorhergehenden Ansprüche, ferner umfassend ein Endgerät, insbesondere ein Mobiltelefon, ein Tablet oder einen Desktop-PC, das dazu ausgelegt ist, auf die Nutzerschnittstelle über das Internet zuzugreifen, um hierüber Abfragen oder Änderungen an der Datenbank vorzunehmen.

6. System nach einem der vorhergehenden Ansprüche, wobei die Recheneinheit dazu ausgelegt ist, mehrere Benutzerkonten zu führen, die einem jeweiligen Nutzer zuordenbar sind, sodass die einem Nutzer gehörenden Rohstoffe über die gesamte Verwertungskette hinweg abrufbar sind.

7. System nach einem der vorhergehenden Ansprüche, wobei die Recheneinheit dazu ausgelegt ist, bei Wahl einer bestimmten Art einer Überweisung des Rohstoffs hiervon abhängige Aktionen zu generieren und diese zu versenden.

8. System nach dem vorhergehenden Anspruch 7, wobei eine von einem Nutzer über die Nutzerschnittstelle angestoßene physische Überweisung eines Rohstoffs dazu führt, dass die Recheneinheit einen Auftrag über eine Abholung und Weitertransport der gewünschten Menge an Rohstoff erzeugt, wobei vorzugsweise dieser Auftrag an ein Transportunternehmen gerichtet ist, um die vom Nutzer disponierte Menge des Rohstoffs am jetzigen Ort abzuholen und an einen gewünschten Ort zu transportieren.

9. System nach einem der vorhergehenden Ansprüche 7 oder 8, wobei eine von einem Nutzer über die Nutzerschnittstelle angestoßene virtuelle Überweisung eines Rohstoffs dazu führt, dass die Recheneinheit einen Auftrag über eine Lieferung des Rohstoffs an einen vom Nutzer wählbaren Lieferort erzeugt, wobei der zur Lieferung beauftragte Rohstoff nicht der im Eigentum des Nutzers befindliche Rohstoff ist, sondern zu diesem ein Äquivalent darstellt.

10. System nach einem der vorhergehenden Ansprüche 7-9, wobei eine von einem Nutzer über die Nutzerschnittstelle angestoßene Überweisung eines Rohstoffs gegen Geldwert dazu führt, dass dem Nutzer anstelle des in seinem Eigentum befindlichen Rohstoffs der dafür angebotene Geldgegenwert übertragen wird.

11. System nach einem der vorhergehenden Ansprüche, wobei die Nutzerschnittstelle so konfiguriert ist, dass sie eine Übersicht über sämtliche von einem bestimmten Nutzer in seinem Eigentum befindliche Rohstoffe liefert.

12. System nach einem der vorhergehenden Ansprüche, wobei die Nutzerschnittstelle so konfiguriert ist, dass sie eine Verlaufsansicht über in der Vergangenheit liegende Aktivitäten in Bezug auf das Disponieren eines Rohstoffs oder der Gesamtheit der im Eigentum eines Nutzers befindliche Rohstoffe liefert.

13. System nach einem der vorhergehenden Ansprüche, wobei die Recheneinheit dazu ausgelegt ist, mehrere Benutzerkonten zu führen, die auf eine Gesamtheit der von einem Nutzer in seinem Eigentum befindlichen Rohstoffe, unabhängig von deren derzeitigem Gang in der Verwertungskette, gerichtet ist.

14. System nach einem der vorhergehenden Ansprüche, wobei die Recheneinheit dazu ausgelegt ist, die einem Nutzer gehörenden Rohstoffe in Bezug auf Menge, Qualität und im Prozess erfolgten Ausschuss über den gesamten Wiederverwertungskreislauf hinweg transparent und nachvollziehbar darzustellen, vorzugsweise derart, dass ein Nutzer dazu in der Lage ist, mithilfe des Systems die Mengenströme eines Rohstoffs digital zu verwalten und zu steuern.

15. System nach einem der vorhergehenden Ansprüche, ferner mit einer Kommunikationseinheit zur Kommunikation mit Dritten, insbesondere mit Lieferanten, Transportunternehmen, Recyclingunternehmen und/oder Entsorgern von Rohstoffen, um die über die Nutzerschnittstelle von einem Nutzer empfangenen Aufträge in Bezug auf einen jeweiligen Rohstoff an einen Dritten zur Ausführung des Auftrags weiterzureichen.
